# EUROPEAN PATENT APPLICATION

(11) **EP 4 349 482 A1**
(43) Date of publication of application: **10.04.2024**
(21) Application number: 22861145.5
(22) Date of filing: 09.08.2022
(51) Int. Cl.: B01J 31/22, B01D 53/14, B01D 53/62, B01D 53/78, C01B 32/40, C25B 1/23, C25B 3/07, C25B 3/26, C25B 9/00

(54) **CARBON DIOXIDE ABSORPTION AND REDUCTION SOLUTION, CARBON DIOXIDE ABSORPTION AND REDUCTION DEVICE, AND CARBON DIOXIDE ABSORPTION AND REDUCTION METHOD**

(30) Priority: 26.08.2021 JP 2021137715
(71) Applicant: Mitsubishi Heavy Industries, Ltd., Tokyo 100-8332 (JP); Tokyo Institute of Technology, Tokyo 152-8550 (JP)
(72) Inventor: TSUJIUCHI, Tatsuya, Tokyo 100-8332 (JP); TAJIMA, Hidehiko, Tokyo 100-8332 (JP); TAGAMI, Naoto, Tokyo 100-8332 (JP); ISHITANI, Osamu, Tokyo 152-8550 (JP); MIYAJI, Masahiko, Tokyo 152-8550 (JP)
(74) Representative: Müller Schupfner & Partner Patent- und Rechtsanwaltspartnerschaft mbB
(86) International application number: PCT/JP2022/030439
(87) International publication number: WO 2023/026855

(57) **Abstract**

This carbon dioxide absorption and reduction solution includes 0.01-100 mM of a metal complex in a mixed solvent of water and a water soluble solvent, wherein: the metal complex includes a central metal atom which is any one of rhenium, manganese, or iron and a ligand which coordinates with the central metal atom; the ligand includes two or more carbonyl groups and two or more nitrogen atom-containing heterocycles; and at least one of the two or more nitrogen atom-containing heterocycles has at least one substituent including a carboxy group or a hydroxy group. If the central metal atom of the metal complex is ruthenium, the nitrogen atom-containing heterocycles do not have to include a carboxy group or a hydroxy group.

## Description

### TECHNICAL FIELD

The present disclosure relates to a carbon dioxide absorption and reduction solution, a carbon dioxide absorption and reduction device, and a carbon dioxide absorption and reduction method.

The present application claims priority based on Japanese Patent Application No. 2021-137715 filed on August 26, 2021, the entire content of which is incorporated herein by reference.

### BACKGROUND ART

When fossil fuels are burned in power plants and chemical plants, a large amount of carbon dioxide is produced, which is one cause of global warming. Therefore, attention is focused on carbon circulation process for recovering and effectively using carbon dioxide, or converting carbon dioxide into valuable resources. As examples of the method of converting carbon dioxide into valuable resources, there may be mentioned electrochemical reduction and photo-electrochemical reduction using light energy. Metal complexes can be used as catalysts for such electrochemical reduction and photo-electrochemical reduction. The carbon dioxide reduction method using such catalysts is described in, for example, Non-Patent Document 1.

### Citation List

### Non-Patent Literature

Non-Patent Document 1: A. Nakada et al. "Selective Electrocatalysis of a Water-Soluble Rhenium(I) Complex for CO2 Reduction Using Water As an Electron Donor" ACS. Catal. 2018, 8, p354-363

### SUMMARY

### Problems to be Solved

However, carbon dioxide-containing gas often contains water, and when watercontaining gas is supplied to an electrolyte solution of a metal complex catalyst that is waterinsoluble, the metal complex does not dissolve in water and will precipitate. In the method described in Non-Patent Document 1, the concentration of the metal complex in the electrolyte solution is kept as low as 0.5 mM in order to prevent the precipitation of metal complexes, but such a low concentration of metal complexes causes a problem of low efficiency of carbon dioxide reduction.

In view of the above, an object of at least one embodiment of the present disclosure is to provide a carbon dioxide absorption and reduction solution, a carbon dioxide absorption and reduction device, and a carbon dioxide absorption and reduction method whereby it is possible to suppress the precipitation of metal complexes as the catalyst for carbon dioxide absorption and reduction.

### Solution to the Problems

To achieve the above object, a carbon dioxide absorption and reduction solution according to the present disclosure is a carbon dioxide absorption and reduction solution containing 0.01 to 100 mM of a metal complex in a mixed solvent of water and a water-soluble solvent, the metal complex containing: a central metal which is any of rhenium, manganese, or iron; and a ligand which coordinates to the central metal. The ligand includes two or more carbonyl groups and two or more nitrogen-containing heterocycles, and at least one of the two or more nitrogen-containing heterocycles has at least one substituent including a carboxy group or a hydroxy group.

Further, a carbon dioxide absorption and reduction solution according to the present disclosure is a carbon dioxide absorption and reduction solution containing 0.01 to 100 mM of a metal complex in a mixed solvent of water and a water-soluble solvent, the metal complex containing: ruthenium; and a ligand which coordinates to ruthenium. The ligand includes two or more carbonyl groups and two or more nitrogen-containing heterocycles.

### Advantageous Effects

With the carbon dioxide absorption and reduction solution of the present disclosure, the precipitation of the metal complex can be suppressed by dissolving the water-soluble metal complex as the catalyst for carbon dioxide absorption and reduction in the mixed solvent of water and a water-soluble solvent.

### BRIEF DESCRIPTION OF DRAWINGS

FIG. 1 is a schematic configuration diagram of a carbon dioxide absorption and reduction device according to an embodiment of the present disclosure.
FIG. 2 is a schematic configuration diagram of a carbon dioxide absorption and reduction device according to a modification of the present disclosure.
FIG. 3 is a schematic configuration diagram of a carbon dioxide absorption and reduction device according to another modification of the present disclosure.

### DETAILED DESCRIPTION

Hereinafter, a carbon dioxide absorption and reduction solution according to embodiments of the present disclosure will be described with reference to the drawings. The embodiment to be described below indicates one aspect of the present disclosure, does not intend to limit the disclosure, and can optionally be modified within a range of a technical idea of the present disclosure.

### <Carbon dioxide absorption and reduction solution according to embodiment of present disclosure>

The carbon dioxide absorption and reduction solution according to an embodiment of the present disclosure is used as an electrolytic solution for electrolysis, and carbon dioxide supplied to the electrolytic solution is reduced to valuable substances such as carbon monoxide and formic acid through electrolysis. This carbon dioxide absorption and reduction solution contains a metal complex in a mixed solvent of water and a water-soluble solvent. The concentration of the metal complex in the mixed solvent is 0.01 to 100 mM as disclosed in the literature (JP6615175B) based on the previous research of one of the inventors of this application.

The concentration of the water-soluble solvent in the mixed solvent is preferably 1 wt% or more and 60 wt% or less, more preferably 10 wt% or more and 50 wt% or less, most preferably 20 wt% or more and 40 wt% or less.

As the metal complex, those represented by the following molecular structures (1) or (2) can be used.

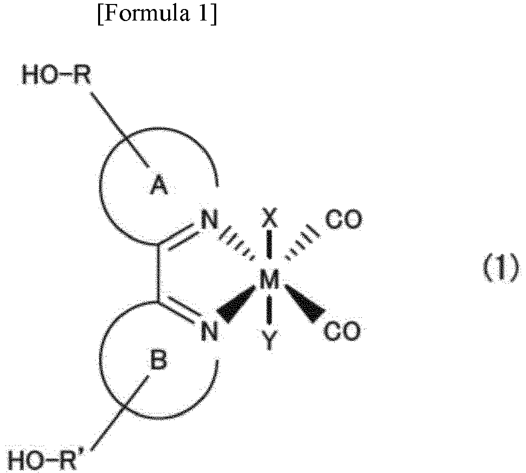

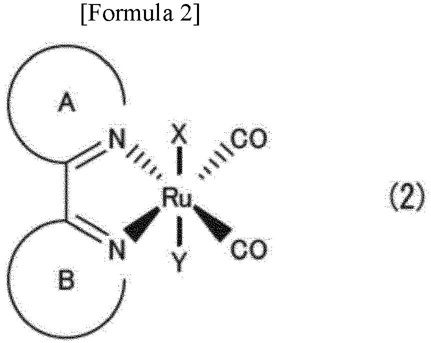

In molecular structure (1), M, the central metal of the metal complex, is either rhenium, manganese, or iron. In molecular structures (1) and (2), the metal complex contains at least two carbonyl groups, at least two nitrogen-containing heterocycles A and B, and ligands X and Y as ligands for the central metal (M and ruthenium). There is no limitation on ligands X and Y, but they may be any functional group, such as a chain or cyclic alkyl group or a functional group containing oxygen, nitrogen, sulfur, phosphorus, or halogen, or may be a carbonyl group or a nitrogen-containing heterocycle, or may be water or a hydroxy group.

The at least two nitrogen-containing heterocycles may have the same or different structures. At least one of the two nitrogen-containing heterocycles A and B of the metal complex represented by molecular structure (1) has a substituent containing a hydroxy group (-R-OH/-R'-OH) as a functional group. In molecular structure (1), both nitrogen-containing heterocycles A and B have substituents containing hydroxy groups, but either one of the nitrogen-containing heterocycles may have a substituent containing a hydroxy group. In the case where the metal complex has three or more nitrogen-containing heterocycles, at least one nitrogen-containing heterocycle may have a substituent containing a hydroxy group. The substituent containing a hydroxy group makes the metal complex represented by molecular structure (1) water-soluble. However, the more carbon atoms in the structure with a substituent containing a hydroxy group, the less soluble the metal complex is in water. For this reason, a hydroxymethyl group or a hydroxyethyl group or a carboxy group are preferred as the substituent containing a hydroxy group. The metal complex represented by molecular structure (2) containing ruthenium as the central metal is water-soluble even if the nitrogen-containing heterocycles A and B have no substituents containing hydroxy groups, but even in the metal complex represented by molecular structure (2), at least one of the nitrogen-containing heterocycles may have a substituent containing a hydroxy group.

The water-soluble solvent is a liquid containing an organic compound having a hydroxy group or a carboxy group. Examples of the organic compound include alcohols, glycols, phenols, phenol derivatives, alkanolamines, and amino acids. Even the organic compound having a hydroxy group or a carboxy group, substances with fewer carbons are preferred since the water solubility decreases as the number of carbons increases. For example, methyl alcohol, ethyl alcohol, 1-propyl alcohol, or 2-propyl alcohol are preferred among alcohols.

Since alkanolamines have the property of absorbing carbon dioxide, carbon dioxide can be reduced efficiently by using an alkanolamine as the water-soluble solvent. Alkanolamines can be classified by structure as primary amines, secondary amines, or tertiary amines, and although amines of each structure differ in their ability to absorb carbon dioxide, they have a higher ability to absorb carbon dioxide than other organic compounds, so alkanolamines of any structure can be used.

Examples of amino acids include, but are not limited to, glycine and alanine. Since they are solids at room temperature, they are used in the form of dissolved in water or other liquid organic compounds.

The mixed solvent preferably contains an inorganic carbonate, an inorganic hydroxide, or an inorganic salt. As the inorganic carbonate, for example, sodium carbonate, potassium carbonate, and calcium carbonate can be used. As the inorganic hydroxide, for example, sodium hydroxide, potassium hydroxide, and calcium hydroxide can be used. As the inorganic salt, for example, carbonates, nitrates, and sulfates can be used. When such salts are not present in the mixed solvent, the ionic conductivity of the carbon dioxide absorption and reduction solution may be low with only 0.01 to 100 mM of the metal complex, making it difficult for the electrolysis reaction to occur. In contrast, the presence of such salts in the mixed solvent maintains the ionic conductivity necessary to allow the reduction reaction by electrolysis of carbon dioxide in the carbon dioxide absorption and reduction solution to proceed.

### <Carbon dioxide absorption and reduction device according to embodiment of present disclosure>

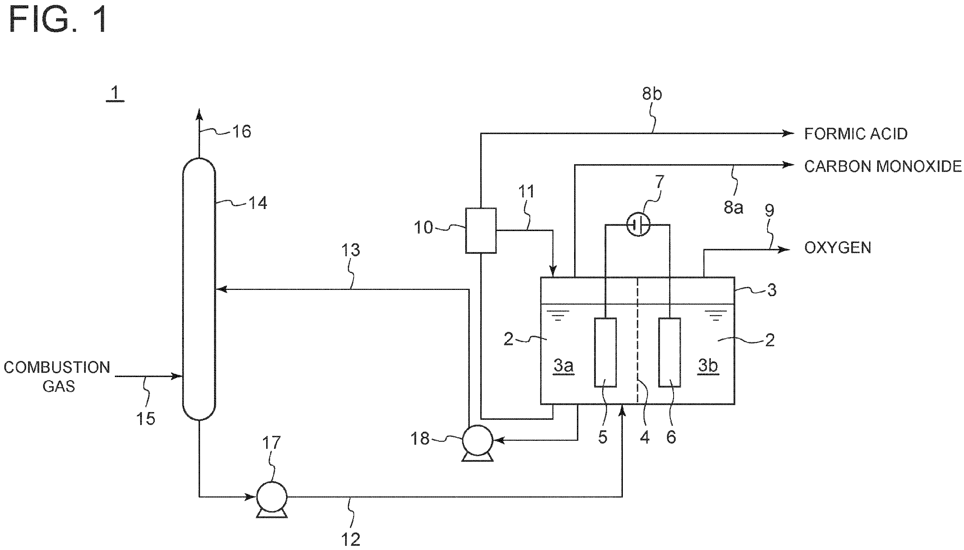

As shown in FIG. 1, a carbon dioxide absorption and reduction device 1 according to an embodiment of the present disclosure includes an electrolysis device 3 containing the above-described carbon dioxide absorption and reduction solution 2. The interior of the electrolysis device 3 is divided into a first chamber 3a and a second chamber 3b by a diaphragm 4. The electrolysis device 3 is provided with a cathode 5 immersed in the carbon dioxide absorption and reduction solution 2 in the first chamber 3a and an anode 6 immersed in the carbon dioxide absorption and reduction solution 2 in the second chamber 3b. Each of the cathode 5 and the anode 6 is electrically connected to a DC power supply 7.

The electrolysis device 3 is not limited to the configuration shown in FIG. 1, i.e., the cathode 5 and the anode 6 are each immersed in the carbon dioxide absorption and reduction solution 2 in the electrolyzer. Another example of the configuration may include an electrolyzer, a power supply electrically connected to the electrolyzer, a pipe for supplying liquid or gaseous reactants to the electrolyzer, and a pipe for discharging the products. As another example, the electrolyzer may be composed of an anode section, a cathode section, an electrolyte section, and an electrolyzer vessel with anode and cathode terminals, and the anode section electrically connected to the anode terminal and the cathode section electrically connected to the cathode terminal may be arranged on opposite sides of the electrolyte section in the electrolyzer. As yet another example, the anode section and the cathode section may be composed of a single member, with a catalytic electrode layer on a power feeding substrate to promote electrolysis reaction. As yet another example, a diaphragm may be arranged in the electrolyte section between the anode section and the cathode section to separate the products of the anode section from those of the cathode section. The diaphragm can be a porous membrane permeated with electrolyte or an ion-permeable non-porous membrane. As yet another example, the anode and cathode sections and the diaphragm may be placed apart or in contact with each other, and the two may be joined together to form a single unit. Yet another example may have an electrode junction membrane in which the electrodes (cathode 5 and anode 6) and the ion exchange membrane are bonded together.

Although the operation of the carbon dioxide absorption and reduction device 1 will be described below, carbon dioxide dissolved in the carbon dioxide absorption and reduction solution 2 is reduced by electrolysis to produce at least one of carbon monoxide or formic acid in the first chamber 3a and oxygen in the second chamber 3b. The carbon dioxide absorption and reduction device 1 is connected to first outflow lines 8a and 8b through which carbon monoxide and formic acid flow out of the first chamber 3a, respectively, and a second outflow line 9 through which oxygen flows out of the second chamber 3b. To allow carbon monoxide produced in the first chamber 3a to flow out of the first chamber 3a, the first outflow line 8a is connected to a gas phase portion of the first chamber 3a. To allow the carbon dioxide absorption and reduction solution 2 containing formic acid produced in the first chamber 3a to flow out of the first chamber 3a, the first outflow line 8b is connected to a liquid phase portion of the first chamber 3a, and the first outflow line 8b is provided with a separation device 10 to separate formic acid from the carbon dioxide absorption and reduction solution 2 flowing out of the first chamber 3a, for example, a distillation device or a membrane separation device, and with a return line 11 to return the carbon dioxide absorption and reduction solution 2 from which formic acid has been separated in the separation device 10 to the first chamber 3a. If only carbon monoxide is produced in the first chamber 3a and no formic acid is produced, there is no need to install the separation device 10.

When carbon dioxide is reduced in a batch process, as in the case where the carbon dioxide absorption and reduction solution 2 dissolved with carbon dioxide is supplied into the electrolysis device 3 and electrolyzed, or in the case where carbon dioxide is dissolved by supplying a gas containing carbon dioxide to the carbon dioxide absorption and reduction solution 2 supplied into the electrolysis device 3 and then decomposed, the above configuration is sufficient for the carbon dioxide absorption and reduction device 1. However, in order to continuously supply carbon dioxide to the electrolysis device 3 for continuous carbon dioxide reduction, a supply line 12 for supplying the carbon dioxide absorption and reduction solution 2 dissolved with carbon dioxide to the first chamber 3a and an outflow line 13 for discharging the carbon dioxide absorption and reduction solution 2 from the first chamber 3a are needed to connect to the first chamber 3a.

As a device for dissolving carbon dioxide into the carbon dioxide absorption and reduction solution 2, for example, but not limited to, an absorption tower 14 configured to bring a gas containing carbon dioxide into gas-liquid contact with the carbon dioxide absorption and reduction solution 2 as the absorption solution may be provided. To the absorption tower 14 is connected a gas supply line 15 for supplying a gas containing carbon dioxide, for example, combustion gas to the absorption tower 14 and a gas outflow line 16 for discharging the gas from which carbon dioxide has been removed from the absorption tower 14. The supply line 12 is connected to the bottom of the absorption tower 14, and the outflow line 13 is connected to the absorption tower 14 above the position where the gas supply line 15 is connected to the absorption tower 14. The supply line 12 and the outflow line 13 are provided with pumps 17 and 18, respectively.

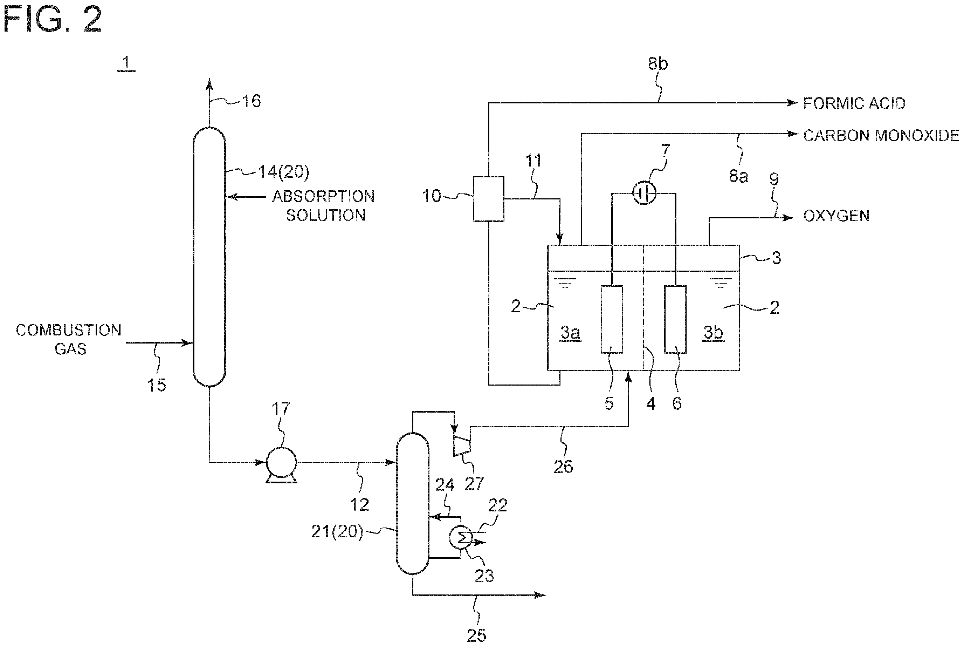

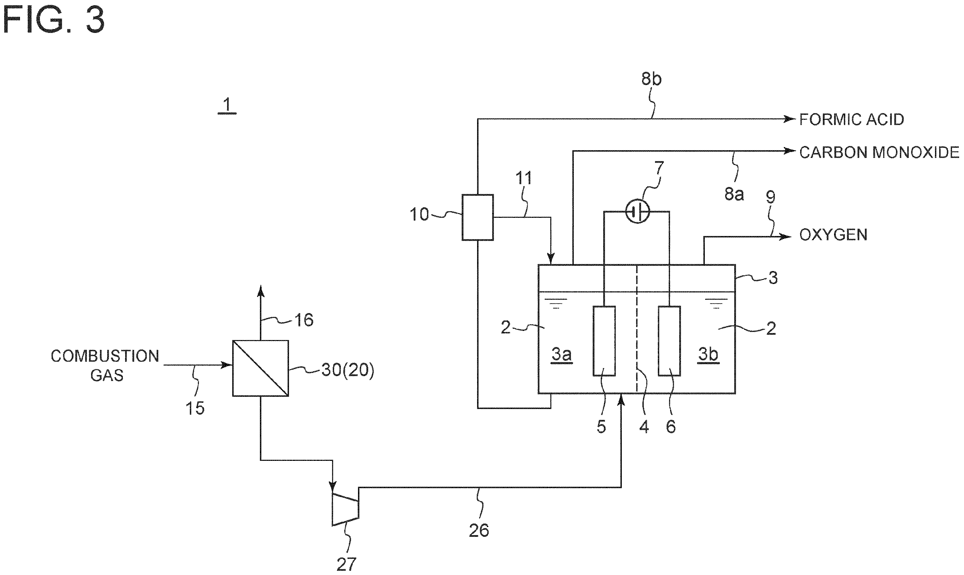

Some embodiments of the carbon dioxide absorption and reduction device 1 configured to reduce carbon dioxide in a batch process as described above are shown in FIGs. 2 and 3. The carbon dioxide absorption and reduction device 1 shown in FIG. 2 includes, as a carbon dioxide recovery device 20 for recovering carbon dioxide from a gas containing carbon dioxide, an absorption tower 14 configured to bring a gas containing carbon dioxide into gas-liquid contact with an absorption solution, and a regeneration tower 21 for releasing carbon dioxide from the absorption solution that has absorbed carbon dioxide in the absorption tower 14. Unlike the carbon dioxide absorption and reduction device 1 shown in FIG. 1, the absorption solution used in the absorption tower 14 is a different absorption solution than the carbon dioxide absorption and reduction solution 2. The absorption tower 14 and the regeneration tower 21 are connected by a supply line 12.

The regeneration tower 21 is equipped with a heat exchanger (reboiler) 23 that includes a heat medium flow passage 22 through which a heat medium (e.g., steam) flows and an absorption solution circulation passage 24 through which the absorption solution in the regeneration tower 21 flows out of the regeneration tower 21 and circulates back to the regeneration tower 21, so that the heat medium flowing through the heat medium flow passage 22 and the absorption solution circulating through the absorption solution circulation passage 24 exchange heat. The bottom of the regeneration tower 21 is connected to an extraction line 25 for extracting the absorption solution. The top of the regeneration tower 21 is connected to the other end of a gas supply line 26, one end of which is connected to the bottom of the first chamber 3a of the electrolysis device 3. The gas supply line 26 is provided with a compressor 27.

The carbon dioxide recovery device 20 is not limited to the configuration described above, including the absorption tower 14 and the regeneration tower 21. Any configuration is acceptable as long as it can recover carbon dioxide from a gas containing carbon dioxide and supply the recovered carbon dioxide to the carbon dioxide absorption and reduction solution 2 in the first chamber 3a of the electrolysis device 3. For example, the carbon dioxide absorption and reduction device 1 shown in FIG. 3 is equipped with a membrane separation device 30 capable of separating carbon dioxide as the carbon dioxide recovery device 20. The membrane separation device 30 is connected to a gas outflow line 16 for discharging the gas from which carbon dioxide has been separated from the membrane separation device 30. The membrane separation device 30 is connected to the bottom of the first chamber 3a through a gas supply line 26 so that the separated carbon dioxide can be fed into the first chamber 3a. The gas supply line 26 is provided with a compressor 27.

### <Operation of carbon dioxide absorption and reduction device according to embodiment of present disclosure>

The operation of the carbon dioxide absorption and reduction solution 2 (carbon dioxide absorption and reduction method) will be now described based on FIG. 1. The absorption tower 14 is supplied with a gas containing carbon dioxide, e.g., combustion gas discharged from a combustion facility (not shown), via the gas supply line 15. The combustion gas supplied to the absorption tower 14 rises up in the absorption tower 14. Further, the absorption tower 14 is supplied with the carbon dioxide absorption and reduction solution 2 as the absorption solution via the outflow line 13. The absorption solution supplied to the absorption tower 14 falls down in the absorption tower 14. In the absorption tower 14, the rising combustion gas and the falling absorption solution come into gas-liquid contact, so that carbon dioxide contained in the combustion gas is absorbed by the absorption solution, and the combustion gas from which carbon dioxide has been removed flows out of the absorption tower 14 through the gas outflow line 16. The absorption solution that has absorbed carbon dioxide is accumulated in a lower portion of the absorption tower 14, but the absorption solution is extracted from the absorption tower 14 by the pump 17 and supplied to the first chamber 3a of the electrolysis device 3 through the supply line 12.

When the DC power supply 7 applies a voltage between the cathode 5 and the anode 6 in the electrolysis device 3, at least one of carbon monoxide or formic acid is produced in the first chamber 3a by the catalytic action of the metal complex dissolved in the carbon dioxide absorption and reduction solution 2, as shown in the following semi-reaction equations (A) and (B). On the other hand, oxygen is produced in the second chamber 3b as shown in the following semi-reaction equation (C).

CO₂+H₂O+2e⁻→CO+2OH⁻ (A)

CO₂+2H₂O+2e⁻ →HCOOH+2OH⁻ (B)

2OH⁻→(1/2)O₂+H₂O+2e⁻ (C)

It is rare that only one of the half-reaction equation (A) or (B) occurs, and usually both reactions occur simultaneously, with the ratio of both reactions varying depending on the type of metal complex. In other words, the production ratio of carbon monoxide and formic acid varies depending on the type of metal complex used.

Carbon monoxide produced in the first chamber 3a flows out of the first chamber 3a via the first outflow line 8a and is sent to a facility that use carbon monoxide, a carbon monoxide storage facility, etc. The formic acid produced in the first chamber 3a flows out of the first chamber 3a together with the carbon dioxide absorption and reduction solution 2 via the first outflow line 8b, and the formic acid is separated from the carbon dioxide absorption and reduction solution 2 in the separation device 10 and sent to a facility that uses formic acid, a formic acid storage facility, etc. The carbon dioxide absorption and reduction solution 2 from which formic acid has been separated in the separation device 10 can be returned to the first chamber 3a via the return line 11. Oxygen produced in the second chamber 3b flows out of the second chamber 3b via the second outflow line 9 and is sent to a facility that use oxygen, an oxygen storage facility, etc.

The pump 18 causes part of the carbon dioxide absorption and reduction solution 2 in the first chamber 3a to flow out of the first chamber 3a through the outflow line 13. The carbon dioxide absorption and reduction solution 2 flowing through the outflow line 13 is supplied to the absorption tower 14, falls in the absorption tower 14, and comes into gas-liquid contact with the combustion gas rising in the absorption tower 14 as the absorption solution.

Thus, by dissolving the water-soluble metal complex as the catalyst for carbon dioxide absorption and reduction in the mixed solvent of water and a water-soluble solvent, the precipitation of the metal complex can be suppressed. As a result, it is possible to improve the reduction efficiency of carbon dioxide. The effect of the metal complex to suppress the precipitation will be described based on the following examples.

In the carbon dioxide absorption and reduction device 1 shown in FIG. 2, carbon dioxide is absorbed by the absorption solution as a result of gas-liquid contact between the gas containing carbon dioxide and the absorption solution in the absorption tower 14. The absorption solution that has absorbed carbon dioxide is supplied to the regeneration tower 21 through the supply line 12. In the regeneration tower 21, the absorption solution is heated by a heat exchanger 23 to release carbon dioxide. The released carbon dioxide is supplied into the first chamber 3a through the gas supply line 26 by the compressor 27. At least part of the carbon dioxide supplied into the first chamber 3 dissolves in the carbon dioxide absorption and reduction solution 2. After a certain amount of carbon dioxide is dissolved in the carbon dioxide absorption and reduction solution 2, the DC power supply 7 applies a voltage between the cathode 5 and the anode 6, so that the carbon dioxide dissolved in the carbon dioxide absorption and reduction solution 2 is reduced according to the above principle.

In the carbon dioxide absorption and reduction device 1 shown in FIG. 3, carbon dioxide is separated from a gas containing carbon dioxide in the membrane separation device 30. The separated carbon dioxide is supplied into the first chamber 3a through the gas supply line 26 by the compressor 27. At least part of the carbon dioxide supplied into the first chamber 3 dissolves in the carbon dioxide absorption and reduction solution 2. After a certain amount of carbon dioxide is dissolved in the carbon dioxide absorption and reduction solution 2, the DC power supply 7 applies a voltage between the cathode 5 and the anode 6, so that the carbon dioxide dissolved in the carbon dioxide absorption and reduction solution 2 is reduced according to the above principle.

### Examples

Experiments were conducted on the following metal complexes (3) and (4) to check for the presence or absence of precipitation. Metal complex (3) corresponds to molecular structure (1), while metal complex (4), in which the nitrogen-containing heterocycle does not contain a hydroxyalkyl group, does not correspond to molecular structure (1).

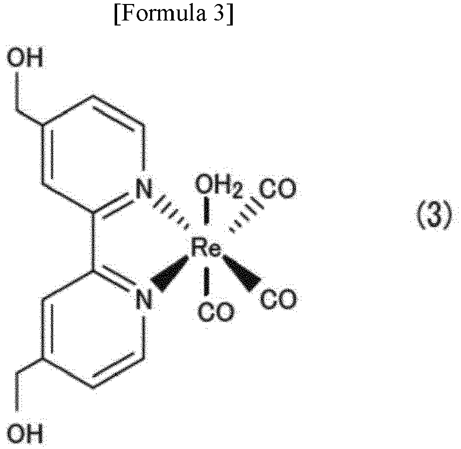

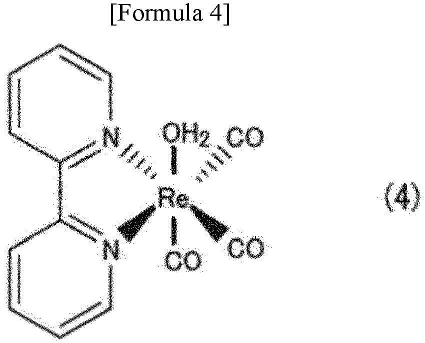

As shown in Table 1 below, Examples 1 through 5, in which metal complex (3) was dissolved in various organic compounds in liquid form, and Comparative Examples 1 and 2, in which metal complex (4) was dissolved, and Comparative Example 3, in which metal complex (3) was dissolved, were prepared as mixed solutions at predetermined concentrations: specifically, a mixture solvent of water and a water-soluble solvent was prepared, and each metal complex was added to reach the target concentration of each example or each comparison example, and while stirring the mixture with a stirrer, it was checked whether the metal complex could be dissolved or not. Examples 1 to 5 and Comparative Example 1 contain trace amounts of water. After confirming that all metal complexes were dissolved in the respective solutions, carbon dioxide-containing gas (with carbon dioxide concentration of 10 vol%) was blown into each solution to check for the precipitation of the complex.

**(Table 1)**

| Example/ Comparative Example | Metal compex [Concentration] | Organic compound [Concentration] | Additive [Concentration] | Precipi tation |
|---|---|---|---|---|
| Example 1 | (3) [1.5mM] | Ethanol [10wt%] | - | Absence |
| Example 2 | (3) [1.5mM] | Ethanol [10wt%] | Sodium sulfate [0.1 M] | Absence |
| Example 3 | (3) [1.5mM] | Ethanol [50wt%] | - | Absence |
| Example 4 | (3) [0.5mM] | Triethanol amine [30wt%] | Sodium sulfate [0.1M] | Absence |
| Example 5 | (3) [0.5mM] | Monoethanol amine [30wt%] | Sodium sulfate [0.1M] | Absence |
| Comparative Example 1 | (4) | Triethanol amine [100wt%] | - | Absence |
| Comparative Example 2 | ( 4 ) | Only water | - | Presence |
| Comparative Example 3 | ( 3 ) | Only water | - | Presence |

In all Examples 1 to 5, no precipitation of the metal complexes was observed. In contrast, in Comparative Example 1, where metal complex (4), which is not water-soluble, was used, no precipitation of the metal complex was observed because the organic compound was not mixed with water, while in Comparative Example 2, where the organic compound could be mixed with water, the precipitation of the metal complex was observed. Moreover, in Comparative Example 2, the metal complex precipitation was observed even though the concentration of the metal complex was lowered to prevent the metal complex precipitation. In Example 3, where metal complex (3) was used, the precipitation of the metal complex was observed. These results indicate that the use of the carbon dioxide absorption and reduction solution of the present disclosure can suppress the precipitation of the metal complex.

Under the conditions of the coexistence of water and ethanol as in Example 1, the equilibrium reaction of each complex formed results in a total of six complexes with Re as the central metal, as shown below. This has suppressed and prevented the precipitation of the metal complex. Based on this mechanism, under conditions of coexistence of water and water-soluble solvent, the use of a water-soluble metal complex allows carbon dioxide to be added without precipitation of the metal complex.

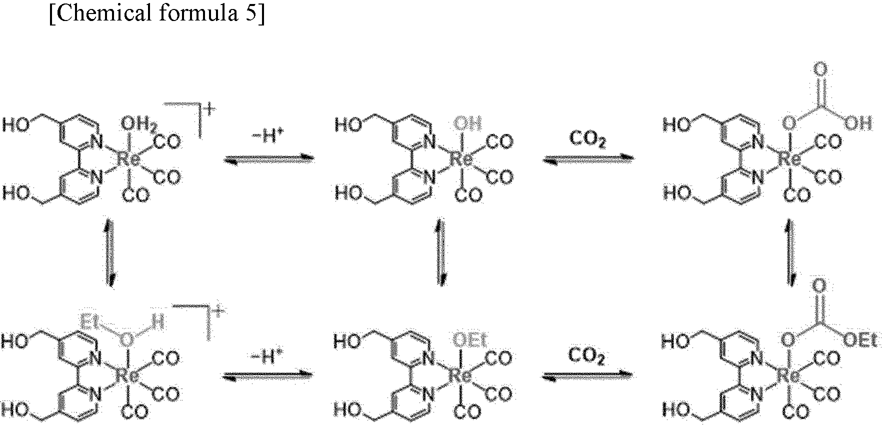

The contents described in the above embodiments would be understood as follows, for instance.
[1] A carbon dioxide absorption and reduction solution according to one aspect is a carbon dioxide absorption and reduction solution (2) containing 0.01 to 100 mM of a metal complex in a mixed solvent of water and a water-soluble solvent, the metal complex containing: a central metal which is any of rhenium, manganese, or iron; and a ligand which coordinates to the central metal. The ligand includes two or more carbonyl groups and two or more nitrogen-containing heterocycles, and at least one of the two or more nitrogen-containing heterocycles has at least one substituent including a carboxy group or a hydroxy group.
   With the carbon dioxide absorption and reduction solution of the present disclosure, the precipitation of the metal complex can be suppressed by dissolving the water-soluble metal complex as the catalyst for carbon dioxide absorption and reduction in the mixed solvent of water and a water-soluble solvent.
[2] A carbon dioxide absorption and reduction solution according to another aspect is the carbon dioxide absorption and reduction solution described in [1], in which the ligand includes two or more carbonyl groups and two or more nitrogen-containing heterocycles, and at least one of the two or more nitrogen-containing heterocycles is at least one hydroxymethyl group or hydroxyethyl group or carboxy group.
   The presence of a hydroxy group at the terminal of the side chain of the nitrogen-containing heterocycle of the ligand coordinating to the central metal makes the metal complex water-soluble, but the more the number of carbon atoms in the carbon chain, the less soluble the metal complex is in water. In contrast, as in the above configuration [2], if the hydroxyalkyl group is a hydroxymethyl group or hydroxyethyl group or carboxy group, the metal complex becomes water-soluble, and the precipitation of the metal complex can be suppressed.
[3] A carbon dioxide absorption and reduction solution according to one aspect is a carbon dioxide absorption and reduction solution containing 0.01 to 100 mM of a metal complex in a mixed solvent of water and a water-soluble solvent, the metal complex containing: ruthenium; and a ligand which coordinates to ruthenium. The ligand includes two or more carbonyl groups and two or more nitrogen-containing heterocycles.
   With the carbon dioxide absorption and reduction solution of the present disclosure, the precipitation of the metal complex can be suppressed by dissolving the water-soluble metal complex as the catalyst for carbon dioxide absorption and reduction in the mixed solvent of water and a water-soluble solvent.
[4] A carbon dioxide absorption and reduction solution according to another aspect is the carbon dioxide absorption and reduction solution described in any one of [1] to [3], in which the water-soluble solvent is a liquid that contains an organic compound having a hydroxy group.
   With this configuration, since the water-soluble metal complex dissolves in the mixed solvent, it is possible to suppress the precipitation of the metal complex.
[5] A carbon dioxide absorption and reduction solution according to still another aspect is the carbon dioxide absorption and reduction solution described in [4], in which the organic compound is methyl alcohol, ethyl alcohol, 1-propyl alcohol, or 2-propyl alcohol.
   With this configuration, since the water-soluble metal complex dissolves in the mixed solvent, it is possible to suppress the precipitation of the metal complex.
[6] A carbon dioxide absorption and reduction solution according to still another aspect is the carbon dioxide absorption and reduction solution described in [4], in which the organic compound is an alkanolamine.
   With this configuration, by using an alkanolamine, which can absorb carbon dioxide, as the water-soluble solvent, carbon dioxide can be reduced efficiently.
[7] A carbon dioxide absorption and reduction solution according to still another aspect is the carbon dioxide absorption and reduction solution described in any one of [1] to [6], in which the mixed solvent contains an inorganic carbonate, an inorganic hydroxide, or an inorganic salt.
   With this configuration, by adding an inorganic carbonate, an inorganic hydroxide, or an inorganic salt to the mixed solvent, it is possible to maintain the ionic conductivity necessary to allow the reduction reaction of carbon dioxide in the carbon dioxide absorption and reduction solution by electrolysis to proceed.
[8] A carbon dioxide absorption and reduction solution according to still another aspect is the carbon dioxide absorption and reduction solution described in any one of [1] to [7], in which the water-soluble solvent contains an amino acid.
   With this configuration, since the water-soluble metal complex dissolves in the mixed solvent, it is possible to suppress the precipitation of the metal complex.
[9] A carbon dioxide absorption and reduction device according to one aspect includes an electrolysis device (3) containing the carbon dioxide absorption and reduction solution (2) described in any one of [1] to [8].
   With the carbon dioxide absorption and reduction device of the present disclosure, the precipitation of the metal complex can be suppressed by dissolving the water-soluble metal complex as the catalyst for carbon dioxide absorption and reduction in the mixed solvent of water and a water-soluble solvent. As a result, it is possible to improve the reduction efficiency of carbon dioxide.
[10] A carbon dioxide absorption and reduction device according to another aspect is the carbon dioxide absorption and reduction device described in [9], including: a supply line (12) for supplying the carbon dioxide absorption and reduction solution that has absorbed carbon dioxide into the electrolysis device (3); and an outflow line (13) through which the carbon dioxide absorption and reduction solution (2) flows out of the electrolysis device (3).
   This configuration allows for continuous carbon dioxide absorption and reduction.
[11] A carbon dioxide absorption and reduction device according to still another aspect is the carbon dioxide absorption and reduction device described in [10], further including an absorption tower (14) configured to bring a gas containing carbon dioxide into contact with the carbon dioxide absorption and reduction solution so that carbon dioxide is absorbed by the carbon dioxide absorption and reduction solution. The carbon dioxide absorption and reduction solution that has absorbed carbon dioxide in the absorption tower (14) is supplied into the electrolysis device (3) through the supply line (12), and the carbon dioxide absorption and reduction solution flowing out of the electrolysis device (3) through the outflow line (13) is supplied to the absorption tower (14) and comes into contact with the gas.
   With this configuration, carbon dioxide recovered from the gas containing carbon dioxide can be reduced continuously.
[12] A carbon dioxide absorption and reduction device according to still another aspect is the carbon dioxide absorption and reduction device described in [9], including: a carbon dioxide recovery device (20) for recovering carbon dioxide from a gas containing carbon dioxide; and a gas supply line (26) for supplying carbon dioxide recovered in the carbon dioxide recovery device (20) to the carbon dioxide absorption and reduction solution (2) contained in the electrolysis device (3).
   With this configuration, carbon dioxide recovered from the gas containing carbon dioxide can be reduced in a batch process.
[13] A carbon dioxide absorption and reduction device according to still another aspect is the carbon dioxide absorption and reduction device described in [12], in which the carbon dioxide recovery device (20) includes: an absorption tower (14) configured to bring the gas containing carbon dioxide into contact with an absorption solution so that carbon dioxide is absorbed by the absorption solution; and a regeneration tower (21) configured to release carbon dioxide from the absorption solution that has absorbed carbon dioxide. Carbon dioxide released in the regeneration tower (21) is supplied to the carbon dioxide absorption and reduction solution (2) contained in the electrolysis device (3) through the gas supply line (26).
   With this configuration, carbon dioxide recovered from the gas containing carbon dioxide can be reduced in a batch process.
[14] A carbon dioxide absorption and reduction method according to one aspect includes: a step of supplying carbon dioxide to the carbon dioxide absorption and reduction solution (2) described in any one of [1] to [8]; and a step of electrolyzing the carbon dioxide absorption and reduction solution (2) supplied with carbon dioxide.
   With the carbon dioxide absorption and reduction method of the present disclosure, the precipitation of the metal complex can be suppressed by dissolving the water-soluble metal complex as the catalyst for carbon dioxide absorption and reduction in the mixed solvent of water and a water-soluble solvent. As a result, it is possible to improve the reduction efficiency of carbon dioxide.
[15] A carbon dioxide absorption and reduction method according to another aspect is the carbon dioxide absorption and reduction method described in [14], in which at least one of carbon monoxide or formic acid is produced by electrolyzing the carbon dioxide absorption and reduction solution (2).

With this method, by reducing carbon dioxide to produce at least one of carbon monoxide or formic acid, carbon dioxide can be converted into a valuable resource and effectively used.

### Reference Signs List

- 1: Carbon dioxide absorption and reduction device
- 2: Carbon dioxide absorption and reduction solution
- 3: Electrolysis device
- 12: Supply line
- 13: Outflow line
- 14: Absorption tower
- 20: Carbon dioxide recovery device
- 21: Regeneration tower
- 26: Gas supply line

## Claims

1. A carbon dioxide absorption and reduction solution, comprising 0.01 to 100 mM of a metal complex in a mixed solvent of water and a water-soluble solvent,
wherein the metal complex contains:
a central metal which is any of rhenium, manganese, or iron; and
a ligand which coordinates to the central metal, and
wherein the ligand includes two or more carbonyl groups and two or more nitrogen-containing heterocycles, and at least one of the two or more nitrogen-containing heterocycles has at least one substituent including a carboxy group or a hydroxy group.

2. The carbon dioxide absorption and reduction solution according to claim 1,
wherein the ligand includes two or more carbonyl groups and two or more nitrogen-containing heterocycles, and at least one of the two or more nitrogen-containing heterocycles is at least one hydroxymethyl group or hydroxyethyl group or carboxy group.

3. A carbon dioxide absorption and reduction solution, comprising 0.01 to 100 mM of a metal complex in a mixed solvent of water and a water-soluble solvent,
wherein the metal complex contains:
ruthenium; and
a ligand which coordinates to ruthenium, and
wherein the ligand includes two or more carbonyl groups and two or more nitrogen-containing heterocycles.

4. The carbon dioxide absorption and reduction solution according to any one of claims 1 to 3,
wherein the water-soluble solvent is a liquid that contains an organic compound having a hydroxy group.

5. The carbon dioxide absorption and reduction solution according to claim 4,
wherein the organic compound is methyl alcohol, ethyl alcohol, 1-propyl alcohol, or 2-propyl alcohol.

6. The carbon dioxide absorption and reduction solution according to claim 4,
wherein the organic compound is an alkanolamine.

7. The carbon dioxide absorption and reduction solution according to any one of claims 1 to 3,
wherein the mixed solvent contains an inorganic carbonate, an inorganic hydroxide, or an inorganic salt.

8. The carbon dioxide absorption and reduction solution according to any one of claims 1 to 3,
wherein the water-soluble solvent contains an amino acid.

9. A carbon dioxide absorption and reduction device, comprising an electrolysis device containing the carbon dioxide absorption and reduction solution according to any one of claims 1 to 3.

10. The carbon dioxide absorption and reduction device according to claim 9, comprising:
a supply line for supplying the carbon dioxide absorption and reduction solution that has absorbed carbon dioxide into the electrolysis device; and
an outflow line through which the carbon dioxide absorption and reduction solution flows out of the electrolysis device.

11. The carbon dioxide absorption and reduction device according to claim 10, further comprising an absorption tower configured to bring a gas containing carbon dioxide into contact with the carbon dioxide absorption and reduction solution so that carbon dioxide is absorbed by the carbon dioxide absorption and reduction solution,
wherein the carbon dioxide absorption and reduction solution that has absorbed carbon dioxide in the absorption tower is supplied into the electrolysis device through the supply line, and the carbon dioxide absorption and reduction solution flowing out of the electrolysis device through the outflow line is supplied to the absorption tower and comes into contact with the gas.

12. The carbon dioxide absorption and reduction device according to claim 9, comprising:
a carbon dioxide recovery device for recovering carbon dioxide from a gas containing carbon dioxide; and
a gas supply line for supplying carbon dioxide recovered in the carbon dioxide recovery device to the carbon dioxide absorption and reduction solution contained in the electrolysis device.

13. The carbon dioxide absorption and reduction device according to claim 12,
wherein the carbon dioxide recovery device includes:
an absorption tower configured to bring the gas containing carbon dioxide into contact with an absorption solution so that carbon dioxide is absorbed by the absorption solution; and
a regeneration tower configured to release carbon dioxide from the absorption solution that has absorbed carbon dioxide, and
wherein carbon dioxide released in the regeneration tower is supplied to the carbon dioxide absorption and reduction solution contained in the electrolysis device through the gas supply line.

14. A carbon dioxide absorption and reduction method, comprising:
a step of supplying carbon dioxide to the carbon dioxide absorption and reduction solution according to any one of claims 1 to 3; and
a step of electrolyzing the carbon dioxide absorption and reduction solution supplied with carbon dioxide.

15. The carbon dioxide absorption and reduction method according to claim 14,
wherein at least one of carbon monoxide or formic acid is produced by electrolyzing the carbon dioxide absorption and reduction solution.
